Europäisches Patentamt

European Patent Office

Office européen des brevets

(19)

(11) Veröffentlichungsnummer: **0 153 484**
**B1**

(12) # EUROPÄISCHE PATENTSCHRIFT

(45) Veröffentlichungstag der Patentschrift:
14.09.88

(51) Int. Cl.⁴: **H 02 P 3/24**

(21) Anmeldenummer: 84115979.1

(22) Anmeldetag: 20.12.84

(54) Verfahren zum Bremsen von Asynchronmotoren.

(30) Priorität: 24.02.84 CH 920/84

(43) Veröffentlichungstag der Anmeldung:
04.09.85 Patentblatt 85/36

(45) Bekanntmachung des Hinweises auf die Patenterteilung:
14.09.88 Patentblatt 88/37

(84) Benannte Vertragsstaaten:
DE FR GB SE

(56) Entgegenhaltungen:
DE - A - 2 904 030
US - A - 3 866 097

PATENTS ABSTRACTS OF JAPAN, Band 7, Nr. 115
(E-176)(1260), 19. Mai 1983; & JP - A - 58 33978 (TOKYO
SHIBAURA DENKI K.K.) 28.02.1983

(73) Patentinhaber: GEBRÜDER SULZER
AKTIENGESELLSCHAFT, Zürcherstrasse 9,
CH-8401 Winterthur (CH)

(72) Erfinder: Kägi, Ulrich, Stadlerstrasse 148,
CH-8404 Winterthur (CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

## Beschreibung

Die Erfindung betrifft ein Verfahren zum Bremsen eines an ein Drehstromnetz angeschlossenen Asynchronmotors gemäß dem Oberbegriff des Anspruchs 1.

Ein solches Verfahren ist aus Patent Abstracts of Japan, Bd 7, Nr. 115 (E-716) (1260) vom 19. Mai 1983 (JP-A-58-33978) bekannt. Bei diesem Verfahren wird mit einer Vorrichtung gearbeitet, die Schütze zum Einschalten des Bremsgleichstroms verwendet. Nach dem Trennen des Motors vom Netz treten diese Einschaltschütze erst in Funktion, wenn die Rückspannung in einer Motorwicklung einen bestimmten Sollwert unterschritten hat. Die Zeit vom Trennen des Motors bis zum Einspeisen des Bremsgleichstroms ist verhältnismässig groß, da zuerst die Sollwertunterschreitung der Rückspannung abgewartet werden muß und außerdem die Schütze eine bestimmte Anzugsverzögerung haben. Die Rückspannung selbst wird nicht zum Bremsen verwendet, und die im Einschaltpunkt herrschende Phasenlage der Rückspannung bleibt unberücksichtlgt. Hierdurch bedingt, können sich mit dem bekannten Bremsverfahren noch gewisse Streuungen bezüglich des Bremsweges wie auch der Bremszeit bis zum Stillstand des Motors ergeben; die Bremszeit kann etwa vom einfachen bis zum doppelten Wert variieren. Die Streuung des Bremsweges ist dabei noch größer. Im allgemeinen sind diese Unterschiede nicht schädlich. Wird der Asynchronmotor jedoch zum Positionieren, z.B. von Ventilen, eingesetzt, so bedingen diese Streuungen, daß die Bremsung durch Anwenden höherer Bremsströme verstärkt wird. Diese höheren Ströme bedingen ihrerseits eine besonders aufwendige Bemessung des Motors und der zugehörigen Steuereinrichtung.

Es ist Aufgabe der Erfindung, das Bremsverfahren der eingangs genannten Art hinsichtlich der Bremsgenauigkeit zu verbessern, ohne daß der Motor durch höhere Ströme stärker belastet wird.

Diese Aufgabe wird erfindungsgemäß durch die Merkmale des Kennzeichens des Anspruchs 1 gelöst.

Bei diesem Bremsverfahren erfolgt das Einschalten des Bremsgleichstroms wesentlich früher als beim bekannten Verfahren, weil der Einschaltzeitpunkt unter Berücksichtigung der Phasenlage der Rückspannung gewählt wird. Ausserdem wird die Rückspannung für den Bremsvorgang ausgenützt. Hierdurch wird ein wesentlich kürzerer Bremsweg als beim bekannten Verfahren erzielt, wobei auch die Streuungen beträchtlich reduziert werden, was eine größere Bremsgenauigkeit zur Folge hat.

Die Verwendung eines Nulldurchganges einer Phase der Rückspannung zum Auslösen der Bremsgleichstromzufuhr nach Anspruch 2 hat sich als sehr günstig erwiesen.

Gemäß Anspruch 3 wird die Bremsgleichstromzufuhr vom Nulldurchgang einer Phase der Netzspannung ausgelöst. Dies ist möglich, weil während einer kurzen Zeit nach dem Trennen des Motors vom Drehstromnetz und vor dem Einschalten des Bremsgleichstromes der Rotor des Asynchronmotors weiterläuft, so daß eine weitgehende Übereinstimmung in der Phasenlage der vom Motor erzeugten Rückspannung und der Netzspannung bestehen bleibt. Da die Netzspannung meistens einfacher als die Rückspannung gemessen werden kann, ist dieses Verfahren sehr oft von Vorteil.

Die Verwendung eines Nulldurchganges einer durch Überlagerung von Rückspannung und Bremsgleichspannung vorbereiteten Bremsspannung zum Zuführen des Bremsgleichstromes, entsprechend Anspruch 4, stellt eine weitere vorteilhafte Ausführungsform der Erfindung dar, sofern – wie es bevorzugt wird – die Bremsgleichspannung kleiner als der größte momentane Wert der Rückspannung ist.

Die Ausführungsform nach Anspruch 5 erlaubt es, ohne dem Verbrauch unterworfene Batterien auszukommen.

Durch Anwendung einer Spannungswandlung gemäß Anspruch 6 gelingt es auf einfache Weise, beim Bremsen die Motorbelastung auf ein erträgliches Maß zu beschränken. Eine weitere Verkürzung der Bremsdauer wird durch das Verfahren nach Anspruch 7 erzielt, wobei eine gegenseitige Beeinflussung der verschiedenen Wicklungen verhindert wird. Schließlich führen auch die Merkmale nach den Ansprüchen 8 und 9 zu einer weiteren Erhöhung der Bremsgenauigkeit.

Die Erfindung wird nun an einigen Ausführungsbeispielen anhand der Zeichnung näher erläutert. Es zeigen:

Fig. 1 einen schematisierten zeitlichen Verlauf der Bremsgleichspannung $U_g$ und der Rückspannung $U_r$ in einer Wicklung eines Asynchronmotors während eines Bremsverfahrens (schraffierter Bereich) nach der Erfindung, wobei die Bremsgleichspannung positiv ist,

Fig. 2 ähnliche Spannungsverläufe wie Fig. 1, wobei aber die Bremsgleichspannung negativ ist,

Fig. 3 ein Schaltschema einer Vorrichtung zum Durchführen des Verfahrens nach Fig. 1.

Fig. 4 und 5 je einen schematisierten, zeitlichen, abgewandelten Verlauf der Bremsgleichspannung und der Rückspannung und

Fig. 6 ein Schaltschema einer Vorrichtung zum Durchführen des Verfahrens nach Fig. 5.

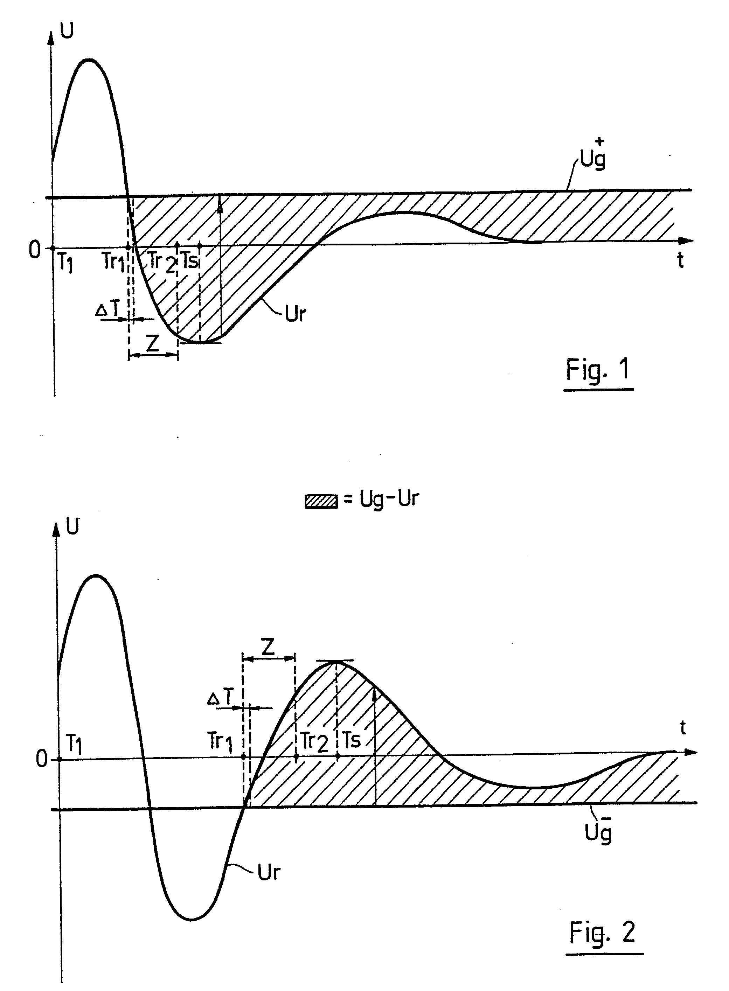

In Fig. 1 und 2 stellen die Ordinate die Spannung U in einer Wicklung eines Asynchronmotors und die Abszisse die Zeit t dar. Nach dem Trennen des Motors vom Drehstromnetz im Zeitpunkt $T_1$ entstehen in den Wicklungen des Asynchronmotors wechselnde Rückspannungen $U_r$, von denen in Fig. 1 und 2 nur jeweils eine Phase gezeigt ist. Eine Gleichstromquelle liefert eine Bremsgleichspannung $U_g$. Diese beiden Spannungen werden miteinander in einem Einschaltzeitpunkt zusammengeschaltet, der erfindungsgemäß innerhalb einer Zeitspanne z liegt, die sich von einem ersten Referenzzeitpunkt $T_{r1}$, in dem die Rückspannung $U_r$ und die Gleichspannung $U_g$ einander gleich sind, bis zu einem zweiten Referenzzeitpunkt $T_{r2}$ erstreckt; der zweite Referenzzeitpunkt $T_{r2}$ befindet sich um einen Betrag von 5% der vollen Schwingungsdauer der Netzspannung vor dem dem ersten Referenzzeitpunkt $T_{r1}$ nächstfolgenden Scheitelpunkt des zeitlichen Verlaufs der Rückspannung $U_r$. Der Scheitelpunkt ist mit Ts bezeichnet. Die Netzspannung beträgt z.B. 380 V bei einer Frequenz von 50 Hz. Wie schon erwähnt, ist in Fig. 1 die Polarität der Gleichspannung $U_g$ positiv, also umgekehrt zur negativen Polarität, die die Rückspannung $U_r$ im ersten Referenzzeitpunkt $T_{r1}$ anstrebt.

In Fig. 2 weist dagegen die Gleichspannung $U_g$ eine negative Polarität auf, so daß im, Referenzzeitpunkt $T_{r1}$ die Rückspannung $U_r$ von einer negativen auf eine positive Polarität hin verläuft. Im übrigen entsprechen sich die beiden Fig. 1 und 2, wobei die Differenz zwischen der Gleichspannung $U_g$ und der Rückspannung $U_r$ – das eigentliche Maß für die Bremswirkung – vom Einschaltzeitpunkt an schraffiert dargestellt ist.

Aus Fig. 1 und 2 ist ersichtlich, daß für den Einschaltzeitpunkt die größtmögliche Differenz zwischen der Bremsgleichspannung $U_g$ und der Rückspannung $U_r$ benutzt wird unter Berücksichtigung der Polarität der zugeführten Bremsgleichspannung.

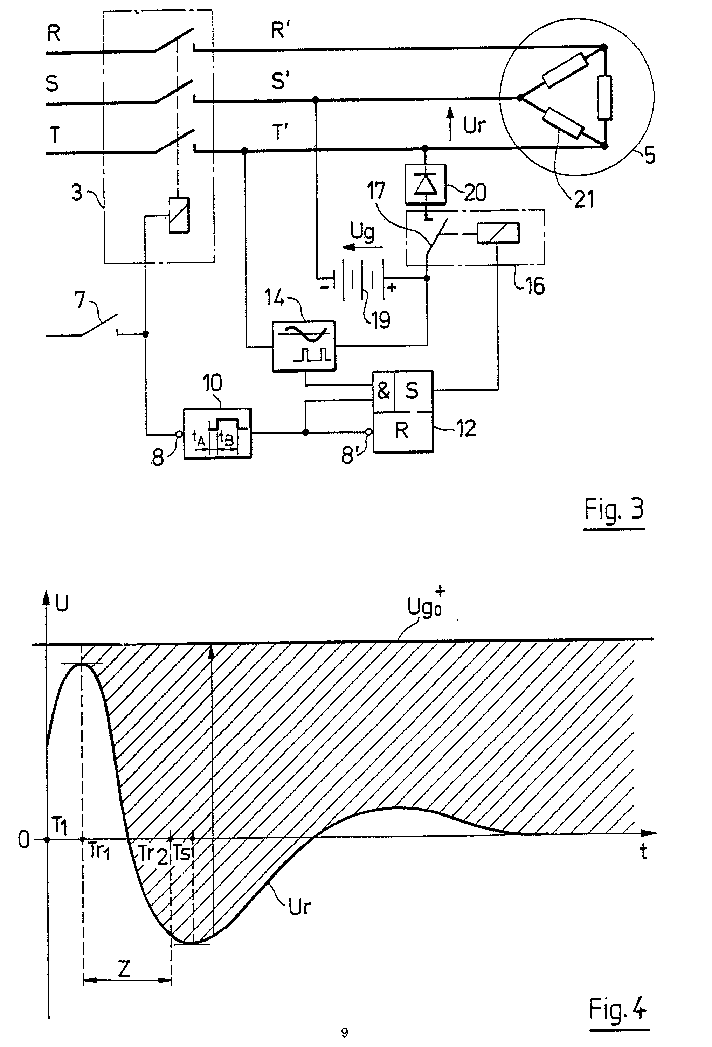

Gemäß Fig. 4 wird eine positive Bremsgleichspannung $U_g$ zugeführt, die größer ist als die größte Rückspannung $U_r$. In diesem Fall erstreckt sich die Zeitspanne z, in der der Einschaltzeitpunkt liegt, von einem ersten Referenzzeitpunkt $T_{r1}$, in dem die Bremsgleichspannung $U_{go}$ der Rückspannung $U_r$ am nächsten kommt, bis zu dem zweiten Referenzzeitpunkt $T_{r2}$, der – wie bei Fig. 1 – durch den nächstfolgenden Scheitelpunkt der Rückspannung bestimmt ist.

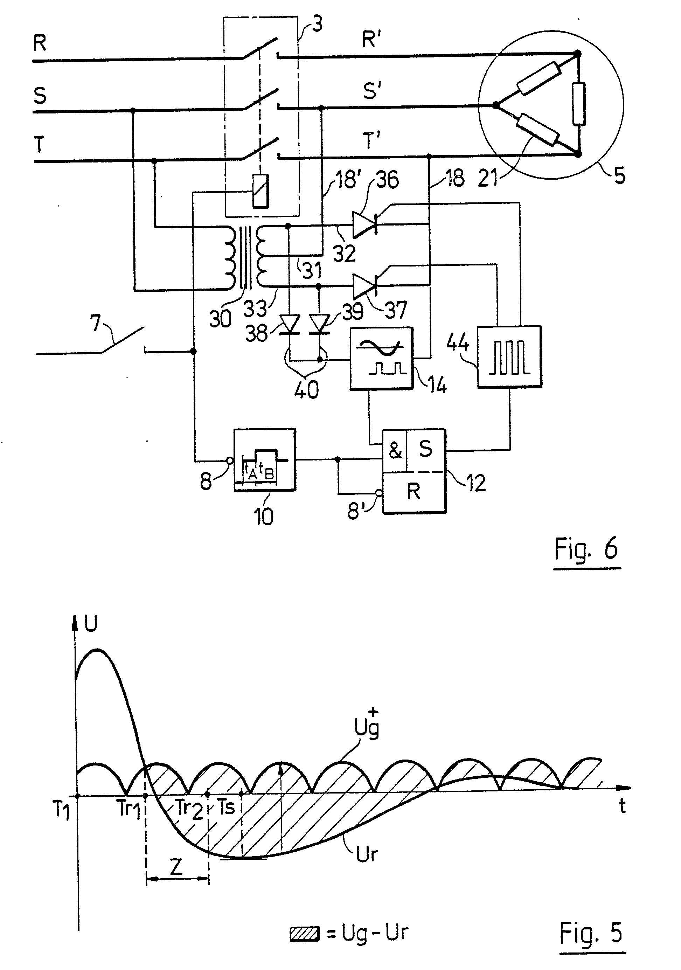

In den Figuren 3 und 6 ist je eine Vorrichtung dargestellt, anhand derer die Durchführung des erfindungsgemäßen Verfahrens im folgenden beschrieben wird. Die Vorrichtung nach Fig. 3 funktioniert wie folgt:

Bei eingeschaltetem Schalter 7 ist das Schütz 3 erregt und der Motor 5 über die Leiter R', S', T' mit Strom aus dem Drehstromnetz R, S, T versorgt. Das Relais 16 ist offen. Am erstgenannten Eingang des Triggers 14 pendelt die Netzspannung.

Wird nun entsprechend Fig. 1 im Zeitpunkt $T_1$ der Schalter 7 geöffnet, so trennt das Schütz 3 die Leiter R', S', T' vom Netz, so daß diese Leiter die vom drehenden Rotor in den Statorwicklungen induzierten Rückspannungen führen. Am erstgenannten Eingang des Triggers 14 stellt sich ein Rückspannungsverlauf $U_r$ ein, der in noch ungestörtem Zustand etwa sinusförmig verläuft. Im Zeitpunkt $T_{r1}$ sind die von der Batterie 19 erzeugte Bremsgleichspannung $U_g$ und die Rückspannung $U_r$ erstmals einander gleich, so daß die an den Eingängen des Triggers 14 anstehende Spannungsdifferenz $U_g - U_r$ erstmals nach dem Öffnen des Schalters 7 Null beträgt, und die Polarität, zu der die Rückspannung $U_r$ strebt, ist umgekehrt zur Polarität der Bremsgleichspannung $U_g$. Der Trigger 14 gibt infolgedessen ein Auslösersignal «1» ab, das dem Und-Eingang des Speichers 12 zugeführt wird. Mit dem Öffnen des Schalters 7 gelangt über die Inversionsstelle 8 ein Signal «1» an das Zeitglied 10, und dessen Ausgang gibt ein Signal «1» an den Und-Eingang des Speichers 12 ab, so daß die Und-Bedingung der S-Seite erfüllt ist und der Speicher kippt. Damit führt der Ausgang des Speichers 12 ein «1»-Signal, und das Relais 16 wird nach einer ihm eigenen Verzögerung $\Delta T$ erregt, wodurch der Kontaktsatz 17 schließt. Damit fließt von der Batterie 19 her über den Einwegdurchlaß 20 und die Wicklung 21 des Asynchronmotors 5 ein aus der gesamten Bremsspannung $U_g - U_r$ sich ergebender Bremsstrom, der der jeweiligen Höhe der in Fig. 1 schraffierten Fläche proportional ist. Durch diesen Bremsstrom wird der Motor gebremst und demzufolge die drehzahlabgängige Rückspannung $U_r$ vermindert. Die Rückspannung $U_r$ schwingt ein zweites Mal durch Null, nun auf einen positiven Wert. Da dieser kleiner ist als die Batteriespannung $U_g$, ändert die gesamte Bremsspannung $U_g - U_r$ ihr Vorzeichen nicht. Durch die weitere Verlangsamung der Rotordrehung und durch das Schwinden der Remanenz nähert sich die Rückspannung $U_r$ von oben her asymptotisch der Nullinie, und entsprechend steigt die Gesamtspannung $U_g - U_r$ wieder auf das Potential $U_g$ der Batterie 19 an. Der Rotor des Asynchronmotors kommt schließlich zur Ruhe, und das entsprechend eingestellte Zeitintervall $t_B$ des Zeitgliedes 10 läuft ab, was zur Folge hat, daß die R-Seite des Speichers 12 erregt wird, der Speicher 12 kippt und dadurch das Relais 16 ausgeschaltet wird. Damit ist der Bremsvorgang abgeschlossen. Auf diese Weise wird die Bremsdauer und insbesondere der Bremsweg – je nach den jeweiligen Verhältnissen – auf z.B. weniger als die Hälfte verkürzt, die Streuung erheblich verbessert und damit die Einstellgenauigkeit erhöht.

Die Vorrichtung nach Fig. 3 läßt sich dahingehend abwandeln, daß das Signal «1» im Zeitglied 10 erst auf «0» zurückgeht, wenn der Schalter 7 wieder geschlossen wird. Die Inversionsstelle 8' wird dann in den zum Eingang des Und-Gliedes führenden Leitungszweig versetzt. Bei dieser Ausführungsform wird der Rotor im ausgeschalteten Zustand durch den Gleichstrom aus der Batterie 19 gehalten.

Ferner könnte anstelle des Speichers 12 ein reines Und-Glied gesetzt werden, sofern anstelle des Triggers 14 ein Trigger verwendet wird, der vom Zeitpunkt der Spannungsgleichheit an einen Dauersprung, z.B. von der Länge $t_B$, abgibt.

Es ist auch möglich, den Trigger 14 – anstelle der in Fig. 3 gezeigten eingangsseitigen Verbindung mit dem Pol der Batterie 19 – mit dem Leiter S' zu verbinden, an den auch der andere Pol der Batterie 19 angeschlossen ist. In diesem Fall entstehen die Triggersignale beim Nulldurchgang der Rückspannung $U_r$ etwas später als im Falle der Schaltung gemäß Fig. 3, aber immer noch innerhalb der gewünschten Zeitspanne.

Es ist ferner möglich, den Trigger 14 eingangsseitig mit zwei Phasen des Drehstromnetzes, beispielsweise T und S, zu verbinden. In diesem Fall, entsteht das Triggersignal bei einem Nulldurchgang der Drehstromphase, wobei – dadurch daß schon am Anfang der Bremsung die Frequenz der Netzspannung ein wenig höher als die Frequenz der Rückspannung $U_r$ ist – etwas früher als der Nulldurchgang der Rückspannung $U_r$, aber immer noch später als die Spannungsgleichheit im Beispiel nach Fig. 3.

Das Ausführungsbeispiel nach Fig. 6 entspricht jenem nach Fig. 3 insoweit, als die gesamte Bremsspannung $U_g - U_r$ dem Trigger 14 eingegeben wird. Abweichend von Fig. 3 stammt jedoch der Bremsgleichstrom nicht aus einer Batterie, sondern wird einem Transformer 30 entnommen, dessen Primärseite an den Phasen S und T des Drehstromnetzes angeschlossen ist. Sekundärseitig weist der Transformer 30 eine Mittelanzapfung 31 auf, die über eine Verbindungsleitung 18' zum Leiter S' führt. Die Enden 32 und 33 der Sekundärwicklung sind über je einen Thyristor 36 und 37 an die Verbindungsleitung 18 angeschlossen, die zum Leiter T' führt. Von den Enden 32 und 33 der Sekundärwicklung des Transformers 30 führt ferner je eine mit einer Diode 38 bzw. 39 bestückte Leitung 40 zu dem einen Eingang des Triggers 14, während der andere Eingang des Triggers 14 über die Leitung 18 mit dem Leiter T' verbunden ist. Der Ausgang des Speichers 12 führt zu einem Trigger 44 mit zwei Ausgängen, von denen jeder einen der Thyristoren 36 und 37 steuert. Für die Vorrichtung nach Fig. 6 ergibt sich der Spannungsverlauf für den Ausschaltfall aus Fig. 5, wonach die Bremsgleichspannung $U_g$ periodisch schwellend verläuft. Analog zu Fig. 1 und 2 liegt der Einschaltzeitpunkt innerhalb der Zeitspanne z, die durch den ersten und den zweiten Referenzzeitpunkt $T_{r1}$ bzw. $T_{r2}$ bestimmt ist. Entsprechend der Bremsgleichspannung $U_g$ ist auch der Bremsverlauf schwellend.

In allen beschriebenen Vorrichtungen fällt die Erteilung des Bremsbefehls mit dem Trennen des Motors 5 vom Drehstromnetz zusammen; dies ist jedoch keine zwingende Bedingung für die Erfindung, denn es ist auch möglich, den erfindungsgemäßen günstigen Einschaltzeitpunkt zu erhalten, wenn nach der Erteilung des Bremsbefehls das Trennen vom Drehstromnetz etwas verzögert wird.

### Patentansprüche

1. Verfahren zum Bremsen eines an ein Drehstromnetz mit einer bestimmten Spannung angeschlossenen Asynchronmotors (5), wobei in einem Einschaltzeitpunkt nach einem Trennen des Motors (5) vom Drehstromnetz abhängig von einer Rückspannung ($U_r$) mindestens einer der Motorwicklungen (21) ein Bremsgleichstrom über einen Einwegdurchlaß zugeführt wird, dadurch gekennzeichnet, daß der Einschaltzeitpunkt zwischen frühestens einem ersten Referenzzeitpunkt ($T_{r1}$) und spätestens einem zweiten Referenzzeitpunkt ($T_{r2}$) liegt, wobei im ersten Referenzzeitpunkt ($T_{r1}$) der Augenblickswert der Rückspannung ($U_r$) einer Motorwicklung (21) der Höhe der Bremsgleichspannung ($U_g$) am nächsten kommt, vorzugsweise gleich ist, und wobei der zweite Referenzzeitpunkt ($T_{r2}$) um einen Betrag von 5% der vollen Schwingungsdauer der Netzspannung vor dem dem ersten Referenzzeitpunkt ($T_{r1}$) nächstfolgenden Scheitelpunkt ($T_s$) des zeitlichen Verlaufs der Rückspannung ($U_r$) liegt, und daß im Einschaltzeitpunkt die Polarität der Bremsgleichspannung ($U_g$) umgekehrt zur Polarität ist, zu der die Rückspannung ($U_r$) im ersten Referenzzeitpunkt ($T_{r1}$) hinstrebt.

2. Verfahren nach Anspruch 1, dadurch gekennzeichnet, daß die Zuführung des Bremsgleichstromes vom Nulldurchgang der Rückspannung ($U_r$) einer Motorwicklung (21) ausgelöst wird.

3. Verfahren nach Anspruch 1, dadurch gekennzeichnet, daß die Zuführung des Bremsgleichstromes vom Nulldurchgang einer Phase der Netzspannung ausgelöst wird.

4. Verfahren nach Anspruch 1, dadurch gekennzeichnet, daß die Zuführung des Bremsgleichstromes vom Nulldurchgang einer durch Überlagerung von Rückspannung ($U_r$) und Bremsgleichspannung ($U_g$) vorbereiteten Bremsspannung ausgelöst wird.

5. Verfahren nach einem der Ansprüche 1 bis 4, dadurch gekennzeichnet, daß die Bremsgleichspannung ($U_g$) durch Gleichrichtung aus dem den Asynchronmotor (5) versorgenden Drehstromnetz (R, S, T) gewonnen wird.

6. Verfahren nach Anspruch 5, dadurch gekennzeichnet, daß vor dem Gleichrichten eine Spannungswandlung (30) vorgenommen wird.

7. Verfahren nach einem der Ansprüche 1 bis 6, dadurch gekennzeichnet, daß bei Anschluß einer Bremsgleichspannung ($U_g$) an zwei oder drei Klemmenpaare (R'–S', S'–T', T'–R') des Asynchronmotors (5) der Bremsstrom nur über jenes Klemmenpaar zugeführt wird, an dem zuerst der erste Referenzzeitpunkt ($T_{r1}$) auftritt.

8. Verfahren nach Anspruch 5 oder 6, dadurch gekennzeichnet, daß zwei entgegengesetzt gepolte Gleichspannung bereitgestellt werden und daß jene, die zuerst einen ersten Referenzzeitpunkt ($T_{r1}$) liefert, auf die Wicklung geschaltet wird.

9. Verfahren nach einem der Ansprüche 5 und 6, dadurch gekennzeichnet, daß mindestens zwei gegeneinander phasenverschobene Bremsspannungen bereitgestellt werden, von denen nur diejenige, die zuerst einen ersten Referenzzeitpunkt ($T_{r1}$) liefert, auf die Wicklung geschaltet wird.

### Claims

1. A method of braking an asynchronous motor (5) connected to a three-phase network having a particular voltage, a d.c. braking current being injected by way of a half-wave rectifier into at least one of the motor windings (21) at a switch-on time after separation of the motor (5) from such network and in dependence on a backvoltage ($U_r$), characterised in that the switch-on time lies between at the earliest a first reference time ($T_{r1}$) and at the latest a second reference time ($T_{r2}$), the instantaneous value of the back voltage ($U_r$) of one motor winding (21) coming closest to, and preferably being equal to, the level of the d.c. braking voltage ($U_g$) at the first reference time ($T_{r1}$), the second reference time ($T_{r2}$) occurring at 5 percent of the complete periodicity of the network voltage before that peak ($T_s$) of the pattern in time of the back voltage ($U_r$) which immediately follows the first reference time ($T_{r1}$); and at the switch-on time the polarity of the d.c. braking voltage ($U_g$) is the opposite of the polarity to which the back voltage ($U_r$) is tending at the first reference time ($T_{r1}$).

2. A method according to claim 1, characterised in that injection of the d.c. braking current is triggered by the passage through zero of the back voltage ($U_r$) of one motor winding (21).

3. A method according to claim 1, characterised in that the injection of the d.c. braking current is trig-

4

gered by the passage through zero of one phase of the network voltage.

4. A method according to claim 1, characterised in that injection of the d.c. braking current is triggered by the passage through zero of a braking voltage prepared by heterodyning the back voltage ($U_r$) with the d.c. braking voltage ($U_g$).

5. A method according to any of claims 1–4, characterised in that the d.c. braking voltage ($U_g$) is produced by rectification from the three-phase network (R, S, T) supplying the asynchronous motor (5).

6. A method according to claim 5, characterised in that a voltage conversion (30) is effected before rectification.

7. A method according to any of claims 1–6, characterised in that in the event of a connection of a d.c. braking voltage ($U_g$) to two or three terminal pairs (R'–S', S'–T', T'–R') of the asynchronous motor (5) the braking current is injected only by way of the terminal pair where the first reference time ($T_{r1}$) occurs first.

8. A method according to claim 5 or 6, characterised in that two d.c. voltages of opposite polarity are prepared and whichever first delivers a first reference time ($T_{r1}$) is connected to the winding.

9. A method according to claim 5 and/or 6, characterised in that at least two phase-shifted braking voltages are prepared and only the one first delivering a first reference time ($T_{r1}$) is connected to the winding.

## Revendications

1. Procédé pour freiner un moteur asynchrone (5) raccordé à un réseau de courant triphasé avec une tension déterminée, dans lequel, à un instant d'enclenchement succédant à une séparation du moteur (5) d'avec le réseau de courant triphasé, un courant continu de freinage est délivré à au moins l'un des enroulements (21) du moteur par l'intermédiaire d'une conduction unidirectionnelle, en fonction d'une tension de retour ($U_r$), caractérisé par le fait que l'instant d'enclenchement se situe entre au plus tôt un premier instant de référence ($T_{r1}$) et au plus tard un second instant de référence ($T_{r2}$), la valeur instantanée de la tension de retour ($U_r$) d'un enroulement (21) du moteur étant la plus rapprochée de, de préférence identique à, la hauteur de la tension continue de freinage ($U_g$) au premier instant de référence ($T_{r1}$), et le second instant de référence ($T_{r2}$) précédant,

d'une valeur de 5% de la durée complète d'oscillations de la tension de réseau, le point culminant ($T_s$) de l'allure temporelle de la tension de retour ($U_r$), qui succède immédiatement au premier instant de référence ($T_{r1}$); et par le fait que, à l'instant d'enclenchement, la polarité de la tension continue de freinage ($U_g$) représente l'inverse de la polarité vers laquelle la tension de retour ($U_r$) tend au premier instant de référence ($T_{r1}$).

2. Procédé selon la revendication 1, caractérisé par le fait que la délivrance du courant continu de freinage est déclenchée par le passage par zéro de la tension de retour ($U_r$) d'un enroulement (21) du moteur.

3. Procédé selon la revendication 1, caractérisé par le fait que la délivrance du courant continu de freinage est déclenchée par le passage par zéro d'une phase de la tension de réseau.

4. Procédé selon la revendication 1, caractérisé par le fait que la délivrance du courant continu de freinage est déclenchée par le passage par zéro d'une tension de freinage élaborée par superposition de la tension de retour ($U_r$) et de la tension continue de freinage ($U_g$).

5. Procédé selon l'une des revendications 1 à 4, caractérisé par le fait que la tension continue de freinage ($U_g$) est obtenue par redressement à partir du réseau de courant triphasé (R, S, T) qui alimente le moteur asynchrone (5).

6. Procédé selon la revendication 5, caractérisé par le fait qu'une transformation de tension (30) a lieu avant le redressement.

7. Procédé selon l'une des revendications 1 à 6, caractérisé par le fait que, en cas de raccordement d'une tension continue de freinage ($U_g$) à deux ou trois paires de bornes (R'–S', S'–T', T'–R') du moteur asynchrone (5), le courant de freinage est délivré seulement par l'intermédiaire de la paire de bornes sur laquelle le premier instant de référence ($T_{r1}$) apparaît tout d'abord.

8. Procédé selon la revendication 5 ou 6, caractérisé par le fait que deux tensions continues à polarités inversées sont élaborées; et par le fait que celle qui délivre tout d'abord un premier instant de référence ($T_{r1}$) est appliquée à l'enroulement.

9. Procédé selon l'une des revendications 5 et 6, caractérisé par le fait qu'au moins deux tensions de freinage à phases mutuellement décalées sont élaborées, tensions dont seulement celle qui délivre tout d'abord un premier instant de référence ($T_{r1}$) est appliquée à l'enroulement.

Fig. 1

$$\text{▨} = Ug - Ur$$

Fig. 2

7

Fig. 3

Fig. 4

9

0 153 484

Fig. 6

Fig. 5

////// = Ug – Ur

11